# EUROPÄISCHE PATENTSCHRIFT

(11) **EP 1 031 494 B1**
(45) Veröffentlichungstag und Bekanntmachung des Hinweises auf die Patenterteilung: **07.01.2004**
(21) Anmeldenummer: 00103219.2
(22) Anmeldetag: 17.02.2000
(51) Int. Cl.: B62D 11/18

(54) **Steuersystem für Raupenfahrzeuge**
Control system for tracked vehicles
Système de contrôle pour véhicules à chenilles

(30) Priorität: 25.02.1999 US 257717
(43) Veröffentlichungstag der Anmeldung: 30.08.2000
(73) Patentinhaber: DEERE & COMPANY, Moline, Illinois 61265-8098 (US)
(72) Erfinder: Anderson, Lawrence Vernon, Cedar Falls, IA 50613 (US); Schletzbaum, John Wayne, Hudson, IA 50643 (US); Mayfield, Ronald Lee, Bettendorf, IA 52722 (US); Yoder, Dennis Royal, Grundy Center, IA 50638 (US); Witte, Benjamin Michael, Fairbank, IA 50629 (US); Hou, Raymond Yifei, Waterloo, IA 50701 (US); Mistry, Sanjay Ishvarlal, Cedar Falls, IA 50613 (US)
(74) Vertreter: Lau-Loskill, Philipp, Dipl.-Phys.

(56) Entgegenhaltungen:
- GB-A- 2 221 518

## Beschreibung

Die Erfindung betrifft ein Steuersystem für ein Raupenfahrzeug mit rechten und linken Gleisbahnen und einem durch eine Motorsteuereinheit gesteuerten Antriebsmotor, welcher eine Lenkverstellpumpe antreibt, die ihrerseits mittels eines Lenkmotors einen differentiellen Mechanismus für den Gleisbahnantrieb antreibt, durch den seinerseits die linken und die rechten Gleisbahnen mit unterschiedlichen Geschwindigkeiten antreibbar sind.

Raupenfahrzeuge werden gelenkt, indem eine Raupengleisbahn schneller angetrieben wird als die andere, wobei für solch ein Wenden des Fahrzeugs beträchtliche Leistung erforderlich ist. Die US-A-4,699,021 beschreibt ein integriertes Leistungssystem für ein Raupenfahrzeug, das durch eine Gasturbine angetrieben wird, bei der der Kraftstoffzufluß zu dem Gasturbinenmotor erhöht wird, wenn sich ein Richtungsbedienelement in einer Position für ein Wenden um eine vertikale Achse oder in einer Gegendreh-Position, bei der sich die Raupengleisbahnen in entgegengesetzter Richtung bewegen, befindet. Dieses System erhöht jedoch nicht die Motorleistung während eines normalen Wendevorgangs (wenn keine Gegendreh-Lenkung vorgenommen wird). Wenn jedoch ein Raupenfahrzeug unter schwerer Last wendet, verbraucht das Lenksystem den größten Teil der Motorleistung. Wenn beispielsweise ein Raupenfahrzeug ein Anbaugerät zieht, steht während eines Wendemanövers (sofern die Motorleistung nicht erhöht wird) weniger Motorleistung zum Betrieb des Anbaugerätes zur Verfügung. Unter einer solchen Bedingung muß die Bedienungsperson einen Kompromiss zwischen der Fahrzeuggeschwindigkeit einerseits und der Eindringtiefe des Anbaugerätes andererseits schließen. Erfolgt eine Einstellung, bei der das Anbaugerät stets, also auch beim Wenden, mit genügend Leistung versorgt, so ergibt sich eine Vergeudung ungenutzter Leistung während des normalen Geradeausbetriebs. Wird jedoch keine ausreichende Leistung für das Wenden vorgehalten, kann dies während eines Wendemanövers das Anheben des Anbaugerätes oder das Wechseln des Gangs erforderlich machen oder zur Überlastung des Antriebsmotors führen.

Die GB-A-2 221 518, die den Oberbegriff des Anspruchs 1 zeigt, beschreibt ein Motor-Getriebe-Steuersystem für einen Kompaktlader (skid-steered vehicle) mit einem Motor, der über ein Verteilergetriebe zwei Hydrostatgetriebe antreibt, welche ihrerseits die rechten bzw. linken Antriebsräder des Fahrzeugs antreiben. Die Übertragungsverhältnisse der Hydrostatgetriebe lassen sich stufenlos einstellen, in dem deren Taumelscheiben durch Verstärker eingestellt werden. Eine Getriebeübersetzungssteuerung bildet aus einem Motordrehzahlsignal und einem Gaspedalsignal ein Differenzsignal, welches dem Mittelabgriff zweier in Reihe geschalteter Potentiometer zugeführt wird, deren Abgriffe durch die Lenkradstellung einstellbar sind. Die Abgriffssignale werden den jeweiligen Verstärkern zugeführt. Die Ansteuerung der Hydrostatgetriebe mittels des Differenzsignals soll zur Folge haben, dass die Einstellung der Hydrostatgetriebe-Übersetzungsverhältnisse in einem engen Motordrehzahlbereich erfolgt, wobei die Lage dieses Drehzahlbereichs von der Gaspedalstellung abhängt. Als Folge hiervon werden Hydrostatgetriebe so angesteuert, das sie einer Motordrehzahländerung infolge einer raschen Gaspedalbetätigung entgegen wirken, in dem der Motor durch die Hydrostatgetriebe stärker belastet bzw. entlastet wird. Hierdurch wird ein gleichmäßiger Betrieb gewährleistet und die Gefahr eines Motorabwürgens vermindert. Wenn bei einem Lenkmanöver die Leistungsanforderungen zunehmen und die Motordrehzahl absinkt, werden durch das Differenzsignal die beiden Taumelscheiben der Hydrostatgetriebe im Sinne geringerer Übersetzung im gleichen Verhältnis verstellt, so dass der Wenderadius bei geringerer Geschwindigkeit beibehalten wird. Ein Ausgleich dieser Geschwindigkeitsabnahme erfolgt über das Gaspedal. Die der Erfindung zugrunde liegende Aufgabe wird darin gesehen, ein gattungsgemäßes Steuersystem für Raupenfahrzeuge anzugeben, durch welches die genannten Probleme überwunden werden. Insbesondere soll automatisch eine ausreichende Leistung für Geradeausfahrt und für Kurvenfahrt bereitgestellt werden, die eine optimale Leistungsausnutzung des Fahrzeugs erlaubt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße Steuersystem findet insbesondere bei einem Raupenfahrzeug Anwendung, welches einen durch eine elektronische Motorsteuereinheit gesteuerten Antriebsmotor enthält. Das Steuersystem erfaßt die Lenkradposition, die Fahrzeuggeschwindigkeit, die Motordrehzahl und die Fahrtrichtung (vorwärts/rückwärts) des Fahrzeugs. In Abhängigkeit dieser erfaßten Eingangsgrößen wird ein Steuersignal erzeugt und beispielsweise für die Steuerung des Taumelscheibenwinkels einer durch den Antriebsmotor angetriebenen Verstellpumpe verwendet, welche einen Lenkmotor antreibt, der seinerseits einen differentiellen Gleisbandantriebsmechanismus antreibt. Das Steuersystem bestimmt auch ein Verhältnis aus Lenkmotordrehzahl und Fahrzeuggeschwindigkeit und erzeugt ein Signal zur Leistungsverstärkung, wenn das Verhältnis einen Schwellwert übersteigt. Es versteht sich, daß das Fahrzeuggeschwindigkeitssignal durch einen geeigneten Drehzahlsensor im Antriebsstrang des Fahrzeugs bereitgestellt werden kann. Das Signal zur Leistungsverstärkung wird der Motorsteuereinheit zugeführt, welche den Antriebsmotor veranlaßt seine Ausgangsleistung zu steigern. Dies verändert die Treibstofförderkurve des Antriebsmotors, so daß diese auf dem Leistungserfordernis des Lenksystems beruht. Dies ermöglicht es, daß im Vergleich zur Geradeausfahrt für das Kurvenfahren des Fahrzeugs automatisch vermehrt Leistung zur Verfügung steht, so daß die Produktivität erhöht und die Anzahl der erforderlichen zusätzlichen Bedienungseingriffe während einer Kurvenfahrt reduziert wird.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das vereinfachte, schematische Diagramm des Antriebs eines Raupenfahrzeugs mit einem erfindungsgemäßen Steuersystem und
- Fig. 2: ein logisches Flußdiagramm eines Kraftverstärker-Algorithmus (power boost algorithmus), der durch den Mikroprozessor des in Fig. 1 dargestellten Steuersystems ausgeführt wird.

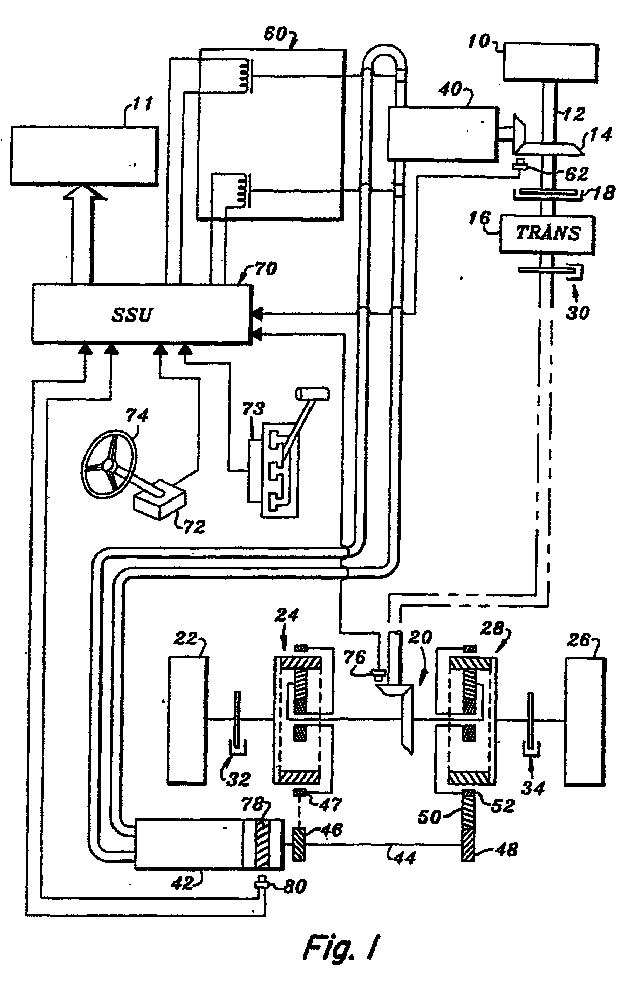

Gemäß Fig. 1 hat der Antriebsmotor 10 eines Raupenfahrzeugs eine Ausgangswelle 12, die ein rechtwinkliges Kegelrad 14 und über eine Kupplung 18 ein Getriebe 16 antreibt. Der Antriebsmotor 10 wird durch eine elektronische Motorsteuerung 11 gesteuert. Das Getriebe 16 treibt ein als rechtwinkliges Kegelradgetriebe 20 ausgebildetes Achsantriebsgetriebe an, welches seinerseits über ein linkes Lenkplanetengetriebe 24 ein linkes Antriebslaufrad 22 sowie über ein rechtes Lenkplanetengetriebe 28 ein rechtes Antriebslaufrad 26 antreibt. Die Lenkplanetengetriebe 24 und 28 sind vorzugsweise wie die in der US-A-5,390,751 beschrieben ausgebildet. Zusätzlich sind zwischen den Lenkplanetengetrieben 24, 28 und den zugehörigen Antriebslaufrädern 22, 26 nicht dargestellte außenliegende Planetengetriebe angeordnet, wie sie bei den John Deere Traktoren der Serie 8000 vorgesehen sind. Diese sind hier jedoch nicht näher beschrieben, weil sie nicht unmittelbar in die auf die Lenkung ansprechende Kraftverstärker-Funktion gemäß vorliegender Erfindung einbezogen sind. Eine Parkbremse 30 steht mit der Ausgangswelle 12 in Verbindung. Linke und rechte Betriebsbremsen 32, 34 sind mit dem linken bzw. dem rechten Antriebslaufrad 22, 26 gekoppelt.

Das rechtwinklige Kegelrad 14 treibt eine hydraulische Lenkverstellpumpe 40, beispielsweise eine 75 cc Pumpe der Serie 90 von der Firma Sauer-Sundstrand, an. Die Lenkverstellpumpe 40 versorgt ihrerseits einen hydraulischen Lenkkonstantmotor 42, beispielsweise einen 75 cc Motor der Serie 90 ebenfalls von der Firma Sauer-Sundstrand. Der Lenkmotor 42 treibt über eine Querwelle 44 und ein Zahnrad 46, ein Ringrad 47 des linken Lenkplanetengetriebes 24 sowie über die Querwelle 44, ein Zahnrad 48 und ein Umkehrzahnrad 50 ein Ringrad 52 des rechten Lenkplanetengetriebes 28 an.

Die nicht gezeigte Taumelscheibe der Lenkverstellpumpe 40 wird durch ein Drucksteuerventil oder eine elektronische Verstellsteuerung (EDC) 60 gesteuert. Die EDC 60 ist vorzugsweise eine bekannte Zweistufenvorrichtung mit einer ersten Stufe, welche ein Klappenrückschlagventil enthält, und mit einer zweiten Stufe, welche eine Druckerhöhungsstufe für die Lenkverstellpumpe 40 enthält, wie beispielsweise eine von der Firma Sauer-Sundstrand käuflich erhältliche Pumpe, deren Steuerschieber geringfügig für kaltes Wetter verändert wurde und die keine manuelle Übersteuerungsfunktion aufweist.

Ein Drehzahlsensor 62, wie beispielsweise ein käuflich erhältlicher magnetischer Aufnehmer, der in der Nähe des rechtwinkligen Kegelrads 14 befestigt ist, liefert ein elektrisches Antriebsmotordrehzahlsignal an eine elektrische Lenksystemsteuereinheit (SSU) 70. Die Magnetspulen des Drucksteuerventils 60 werden durch Pumpensollwertsignale (pump_cmd), die durch die SSU 70 erzeugt werden, gesteuert. Die SSU 70 steht mit der Motorsteuereinheit 11 in Verbindung.

Ein Lenkraddrehpositionswandler 72, wie beispielsweise ein Drehpotentiometer, liefert an die SSU 70 ein elektrisches Lenkwinkelsignal (steer_angle), das die Lage relativ zu einer zentrierten Position eines federzentrierten, durch eine Bedienungsperson betätigbaren Lenkrades 74, repräsentiert.

Ein Antriebsstrangdrehzahlsensor 76, vorzugsweise ein differentieller Halleffektdrehzahlsensor, wie er beispielsweise bei von John Deere hergestellten Traktoren verwendet wird, ist in der Nähe des Endantriebs 20 angeordnet und liefert an die SSU 70 ein elektrisches Endantriebsdrehzahlsignal (whl_spd). Dieses Signal entspricht der Fahrzeuggeschwindigkeit und der Raddrehzahl. Ein Magnetring 78 ist drehbar am Lenkmotor 42 montiert. Ein Halleffektwandler 80, der nahe des Magnetrings 78 befestigt ist, liefert an die SSU 70 ein elektrisches Lenkmotordrehzahlsignal und ein elektrisches Lenkmotorrichtungssignal.

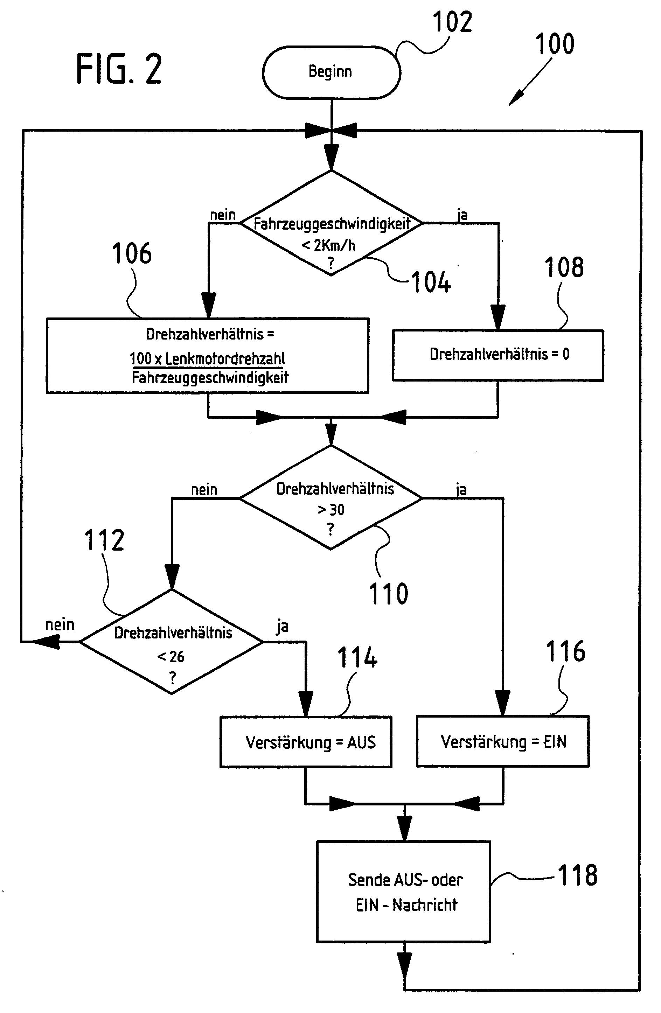

Die SSU 70 enthält einen nicht dargestellten, käuflich verfügbaren Mikroprozessor, der einen Leistungsverstärkungs-Algorithmus 100 ausführt, wie er in Fig. 2 dargestellt ist. Der Leistungsverstärkungs-Algorithmus 100 beginnt mit Schritt 102. Schritt 104 überprüft das Signal des Sensors 76, um festzustellen, ob die Fahrzeuggeschwindigkeit nahe Null oder kleiner als eine Grenzgeschwindigkeit von beispielsweise 2 km/h ist. Trifft dies zu, so setzt Schritt 108 einen Drehzahlverhältniswert auf Null und richtet den Algorithmus auf Schritt 110. Wenn die in Schritt 104 ermittelte Fahrzeuggeschwindigkeit nicht nahe Null ist, schreitet der Algorithmus zu Schritt 106 weiter, in dem ein Drehzahlverhältniswert berechnet wird, der gleich einer Konstanten (hier 100) multipliziert mit dem ermittelten Wert der Lenkmotordrehzahl (von Sensor 80) dividiert durch den ermittelten Wert der Fahrzeuggeschwindigkeit (von Sensor 76) ist.

Nachdem einer der Schritte 106 oder 108 durchlaufen ist, vergleicht Schritt 110 den Drehzahlverhältniswert mit einem ersten Schwellwert oder Einstellwert, der beispielsweise 30 ist. Wenn der Drehzahlverhältniswert größer als der Einstellwert ist, schreitet der Algorithmus zu Schritt 116, welcher ein Verstärkungs-Flag auf EIN setzt. Ist gemäß Schritt 110 der Drehzahlverhältniswert nicht größer als der Einstellwert, schreitet der Algorithmus zu Schritt 112, welcher das Drehzahlverhältnis mit einem zweiten Einstellwert oder Schwellwert vergleicht, der beispielsweise 26 ist. Wenn der Drehzahlverhältniswert nicht kleiner als der zweite Einstellwert ist, kehrt der Algorithmus zu Schritt 104 zurück. Wenn der Drehzahlverhältniswert gemäß Schritt 102 kleiner als der zweite Einstellwert ist, dann setzt der Algorithmus in Schritt 114 das Verstärkungs-Flag auf AUS.

Schritt 118 sendet dann an die Motorsteuereinheit 11 ein der Einstellung aus dem Schritt 114 oder 116 entsprechendes Verstärkungs-EIN- oder Verstärkungs-AUS-Signal, so daß die Motorsteuereinheit 11 die Ausgangsleistung des Antriebsmotors 10 entsprechend erhöht oder nicht erhöht, und führt die Steuerung zurück zu Schritt 104. Damit bewirkt der Algorithmus 100 eine Steigerung der Ausgangsleistung des Antriebsmotors 10, wenn das Fahrzeug eine Kurve durchfährt und wenn das Verhältnis von Lenkmotordrehzahl zur Fahrzeuggeschwindigkeit einen bestimmten Schwellwert übersteigt. Wenn der Schwellwert überschritten wird, wird diese erhöhte Antriebsmotorausgangsleistung beibehalten bis das Verhältnis unter einen zweiten Schwellwert sinkt.

Wenn sich das Fahrzeug in einem reinen Gegendrehmodus befindet, in dem es sich um eine vertikale Achse dreht, dann ist die Fahrzeuggeschwindigkeit (die von dem Sensor 76 erfaßt wird) nahe Null oder kleiner als eine kleine Schwellgeschwindigkeit von beispielsweise 2 km/h und die Schritte 104, 108, 110, 112 und 114 bewirken die Erzeugung eines Leistungserhöhungs-AUS-Signals, so daß sich entsprechend dieses Algorithmus keine Motorleistungserhöhung ergibt. Es versteht sich, daß die Motorsteuereinheit 11 daher ihre normale Betriebsweise ausführt und genügend Treibstoff an die Antriebsmaschine 10 liefert, so daß die Antriebsmaschine 10 die Leistung abgeben kann, die für eine Gegendrehung der Antriebslaufräder 22 und 26 notwendig ist. Gemäß vorliegender Erfindung wird jedoch während des Durchfahrens einer Kurve mit reiner Gegendrehung durch die Motorsteuereinheit 11 keine zusätzliche über das Normale hinausgehende Motorleistungssteigerung abgegeben.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung, wie in den Ansprüchen definiert, fallen.

## Patentansprüche

1. Steuersystem für ein Raupenfahrzeug mit rechten und linken Gleisbahnen und einem Antriebsmotor (10), welcher eine Lenkverstellpumpe (40) antreibt, die ihrerseits mittels eines Lenkmotors (42) einen differentiellen Mechanismus für den Gleisbahnantrieb antreibt, durch den seinerseits die linken und die rechten Gleisbahnen mit unterschiedlichen Geschwindigkeiten antreibbar sind, **gekennzeichnet durch** einen Lenkmotordrehzahlsensor (80) zur Erfassung der Lenkmotordrehzahl, einen Fahrzeuggeschwindigkeitssensor (76), zur Erfassung der Fahrzeuggeschwindigkeit, Mittel zur Bildung eines Verhältnisses aus Lenkmotordrehzahl und Fahrzeuggeschwindigkeit, Mittel zum Vergleich des Verhältnisses mit einem ersten Schwellwert und Mittel zur Erzeugung eines Leistungsverstärkungssignals für den Antriebsmotor (10), wenn das Drehzahlverhältnis größer als der erste Schwellwert ist, wobei eine Motorsteuereinheit (11) die Ausgangsleistung des Antriebsmotors (10) über einen normalen Leistungspegel hinaus steigert, sofern das Fahrzeug eine Kurve durchfährt, ohne auf der Stelle zu drehen, und wobei die Motorsteuereinheit (11) die Ausgangsleistung des Antriebsmotors (10) auf den normalen Leistungspegel einstellt, sofern das Fahrzeug keine Kurve durchfährt.

2. Steuersystem nach Anspruch 1, **gekennzeichnet durch** Mittel zur Erzeugung eines Verstärkungs-Einschaltsignals, sofern das Fahrzeug eine Kurve durchfährt, ohne auf der Stelle zu drehen, Mittel zur Erzeugung eines Verstärkungs-Ausschaltsignals, sofern das Fahrzeug keine Kurve durchfährt, und Mittel zur Übermittlung des Verstärkungs-Einschaltsignals und des Verstärkungs-Ausschaltsignals an die Motorsteuerung (11), welche bei Vorliegen eines Verstärkungs-Einschaltsignals die Ausgangsleistung des Antriebsmotors (10) über einen normalen Leistungspegel hinaus steigert und bei Vorliegen eines Verstärkungs-Ausschaltsignals die Ausgangsleistung des Antriebsmotors (10) auf den normalen Leistungspegel zurückstellt.

3. Steuersystem nach Anspruch 1 oder 2, **gekennzeichnet durch** Mittel zur Einstellung einer Motorausgangsleistung mit normalem Leistungspegel, sofern das Verhältnis kleiner als ein zweiter Schwellwert ist.

4. Steuersystem nach Anspruch 3, **dadurch gekennzeichnet, daß** der zweiter Schwellwert nicht größer als der erste Schwellwert ist.

5. Steuersystem nach einem der Ansprüche 1 bis 4, **gekennzeichnet durch** Mittel zur Erzeugung eines Verstärkungs-Ausschaltsignals, sofern der differentielle Gleisbahnantriebsmechanismus im Wesentlichen in einem reinen Gegendreh-Modus betrieben wird.

6. Steuersystem nach einem der Ansprüche 1 bis 5, **gekennzeichnet durch** Mittel zur Erzeugung eines Verstärkungs-Ausschaltsignals, sofern die Fahrzeuggeschwindigkeit Null oder nahezu Null ist.

## Claims

1. A control system for a tracked vehicle with right and left tracks and a drive engine (10) which drives a variable displacement steering pump (40), which for its part drives a differential mechanism for the track drive by means of a steering motor (42), through which mechanism for its part the left and right tracks can be driven with different speeds, **characterized in that** a steering motor speed of rotation sensor (80) for detecting the steering motor speed of rotation, a vehicle speed sensor (76) for detecting the vehicle speed, means for forming a ratio from the steering motor speed of rotation and the vehicle speed, means for comparing the ratio with a first threshold and means for generating a power boost signal for the drive engine (10) when the speed of rotation ratio is greater than the first threshold, wherein an engine control unit (11) increases the output power of the drive engine (10) beyond a normal power level, insofar as the vehicle is cornering without turning on the spot, and wherein the engine control unit (11) sets the output power of the drive engine (10) to the normal power level insofar as the vehicle is not cornering.

2. A control system according to claim 1, **characterized by** means for generating a boost switch-on signal insofar as the vehicle is cornering, without turning on the spot, means for generating a boost switch-off signal insofar as the vehicle is not cornering, and means for communicating the boost switch-on signal and the boost switch-off signal to the engine controller (11), which increases the output power of the drive engine (10) beyond a normal power level and resets the output power of the drive engine (10) to the normal power level in the presence of a boost switch-off signal.

3. A control system according to claim 1 or 2, **characterized by** means for setting an engine output power at a normal power level insofar as the ratio is smaller than a second threshold.

4. A control system according to claim 3, **characterized in that** the second threshold is not greater than the first threshold.

5. A control system according to any of claims 1 to 4, **characterized by** means for generating a boost switch-off signal insofar as the differential track drive mechanism is operated essentially in a purely counter-rotation mode.

6. A control system according to any of claims 1 to 5, **characterized by** means for generating a boost switch-off signal insofar as the vehicle speed is zero or nearly zero.

## Revendications

1. Système de contrôle pour un véhicule à chenilles avec des trains de roulement droits et gauches et avec un moteur d'entraînement (10) qui entraîne une pompe d'ajustement du guidage (40), qui entraîne à son tour par l'intermédiaire d'un moteur de guidage (42) un mécanisme différentiel pour l'entraînement des trains de roulement, par l'intermédiaire duquel les trains de roulement droit et gauche peuvent être entraînés à des vitesses différentes, **caractérisé par** un capteur de régime de rotation du moteur de guidage (80) pour la saisie du régime de rotation du moteur de guidage, par un capteur de vitesse du véhicule (76) pour la saisie de la vitesse du véhicule, par des moyens servant à former une relation entre le régime de rotation du moteur de guidage et la vitesse du véhicule, par des moyens servant à comparer le rapport avec une première valeur de seuil et par des moyens servant à créer un signal d'amplification de puissance pour le moteur d'entraînement (10) lorsque le rapport de régime de rotation est plus grand que la première valeur de seuil, alors qu'une unité de commande du moteur (11) augmente la puissance de sortie du moteur d'entraînement (10) au-delà d'un niveau de puissance normal lorsque le véhicule s'inscrit dans une courbe sans effectuer de virage sur place et alors que l'unité de commande du moteur (11) règle la puissance de sortie du moteur d'entraînement (10) au niveau de puissance normal lorsque le véhicule ne s'inscrit pas dans une courbe.

2. Système de contrôle selon la revendication 1, **caractérisé par** des moyens servant à créer un signal de mise en marche de l'amplification dans la mesure où le véhicule s'inscrit dans une courbe sans effectuer de virage sur place, par des moyens servant à créer un signal d'arrêt de l'amplification dans la mesure où le véhicule ne s'inscrit pas dans une courbe et par des moyens pour la transmission du signal de mise en marche de l'amplification et du signal d'arrêt de l'amplification à l'unité de commande du moteur (11) qui, en présence d'un signal de mise en marche de l'amplification, augmente la puissance de sortie du moteur d'entraînement (10) au-delà d'un niveau de puissance normal et qui, en présence d'un signal d'arrêt de l'amplification, ramène la puissance de sortie du moteur d'entraînement (10) au niveau de puissance normal.

3. Système de contrôle selon la revendication 1 ou 2, **caractérisé par** des moyens servant au réglage d'une puissance de sortie du moteur avec un niveau de puissance normal dans la mesure où le rapport est inférieur à une deuxième valeur de seuil.

4. Système de contrôle selon la revendication 3, **caractérisé en ce que** la deuxième valeur de seuil n'est pas plus importante que la première valeur de seuil.

5. Système de contrôle selon l'une quelconque des revendications 1 à 4, **caractérisé par** des moyens servant à créer un signal d'arrêt de l'amplification dans la mesure où le mécanisme différentiel pour l'entraînement des trains de roulement est utilisé sensiblement dans un mode de contre-rotation pur.

6. Système de contrôle selon l'une quelconque des revendications 1 à 5, **caractérisé par** des moyens servant à créer un signal d'arrêt de l'amplification dans la mesure où la vitesse du véhicule est égale à zéro ou est presque égale à zéro.
